Europäisches Patentamt

European Patent Office

Office européen des brevets

(19)

(11) **EP 0 931 325 B1**

(12) **EUROPÄISCHE PATENTSCHRIFT**

(45) Veröffentlichungstag und Bekanntmachung des Hinweises auf die Patenterteilung:
**17.05.2000 Patentblatt 2000/20**

(21) Anmeldenummer: **97937430.3**

(22) Anmeldetag: **07.08.1997**

(51) Int Cl.[7]: **H01G 4/008**, H01G 4/012

(86) Internationale Anmeldenummer:
**PCT/DE97/01665**

(87) Internationale Veröffentlichungsnummer:
**WO 98/13839 (02.04.1998 Gazette 1998/13)**

(54) **REGENERIERFÄHIGER ELEKTRISCHER KONDENSATOR**

REGENERABLE CAPACITOR

CONDENSATEUR ELECTRIQUE REGENERABLE

(84) Benannte Vertragsstaaten:
**AT BE CH DE FI FR GB IT LI SE**

(30) Priorität: **27.09.1996 DE 19639877**

(43) Veröffentlichungstag der Anmeldung:
**28.07.1999 Patentblatt 1999/30**

(73) Patentinhaber: **EPCOS AG**
**81541 München (DE)**

(72) Erfinder: **VETTER, Harald**
**D-89520 Heidenheim (DE)**

(74) Vertreter: **Epping, Wilhelm, Dipl.-Ing.**
**Patentanwälte**
**Epping Hermann & Peter**
**Postfach 12 10 26**
**80034 München (DE)**

(56) Entgegenhaltungen:
EP-A- 0 088 137      EP-A- 0 640 996
EP-A- 0 677 594      US-A- 3 644 805

**Beschreibung**

Die Erfindung betrifft einen regenerierfähigen elektrischen Kondensator nach dem Oberbegriff des Patentanspruchs 1.

Die Einsatzmöglichkeiten von Leistungskondensatoren werden wesentlich durch ihre thermischen Eigenschaften bestimmt. Bei selbstheilenden, das heißt regenerierfähigen Kondensatoren, entsteht der größte Teil der Verluste in den Metallschichten der Beläge.

Um die Verluste zu minimieren, können die Metallschichten dicker und damit die Flächenwiderstände kleiner gemacht werden. Dieser Vorgehensweise sind aber aus Gründen Regeneriersicherheit enge Grenzen gesetzt, da ab einer gewissen Dicke der Metallschichten eine ordnungsgemäße Regenerierfähigkeit nicht mehr gewährleistet ist. Es ist daher allgemein bekannt, daß die Dicke von zumindest einer Metallschicht dünn gehalten werden muß.

Verbesserungen haben sich durch einen Kondensator der eingangs genannten Art ergeben, der aus der DE 28 26 481 C2 bekannt ist. Bei dem dort geschilderten Kondensator weisen die, aus einer Legierung von 15-80 Atom-% Aluminium mit Kupfer bestehenden, Metallschichten senkrecht zur Längsrichtung der Folien, also quer zur Laufrichtung der Kondensatorfolie eine variable Dicke auf, so daß das Querschnittsprofil der Metallschichten im wesentlichen keilförmig mit stetig zunehmender Dicke ist. Hierbei herrschen jedoch hinsichtlich des Regenerierverhaltens in der Mitte die ungünstigsten Bedingungen, so daß hierdurch der minimal zulässige Flächenwiderstand an dieser Stelle festgelegt ist.

Ferner ist aus der EP 0 088 137 A1 ein selbstheilender elektrische Kondensator bekannt, bei dem die Metallschichten aus einer Al/Zn-Legierung bestehen, wobei der A1-Anteil von 80% an der der Folie zugekehrten Seite der Metallschicht stetig auf weniger als 20% an der der Folie abgekehrten Seite der Metallschicht abfällt.

Wird die Herstellung von Wickelkondensatoren aus wirtschaftlicher Sicht betrachtet, so ist festzustellen, daß die Fertigung großer Wickeleinheiten generell kostengünstiger ist. Deshalb wird angestrebt, möglichst große Wickeleinheiten mit großen Überdeckungen der gegenpoligen Metallschichten herzustellen. Für den thermischen Haushalt des Kondensators ergibt sich damit aber der ungünstige Effekt, daß die Serienverluste proportional zur Größe der Überdeckung steigen, so daß ein Optimierungsproblem zwischen wirtschaftlicher Wickelherstellung und thermischen Forderungen resultiert.

Aufgabe der vorliegenden Erfindung ist es, einen Kondensator anzugeben, der im Vergleich zum Stand der Technik ein zumindest gleich gutes, aber möglichst ein besseres Regenerierverhalten und eine gleich gute beziehungsweise bessere Lebensdauer aufweist, bei dessen Betrieb minimale Belagverluste entstehen, und der somit eine höhere Ausnutzung des dielektrischen Materials und Kostenreduzierungen ermöglicht.

Diese Aufgabe wird erfindungsgemäß durch einen Kondensator gelöst, der die Merkmale des Patentanspruchs 1 aufweist.

Vorteilhafte Ausgestaltungen des Gegenstandes der Erfindung sind in den Unteransprüchen angeführt.

Die Erfindung wird im folgenden anhand von Ausführungsbeispielen erläutert.

In der dazugehörenden Zeichnung zeigen:

Fig.1 den schematischen Querschnitt durch zwei Folienlagen des Kondensators und
Fig.2 die qualitative Verteilung der Legierungsbestandteile für eine Kondensatorfolie.

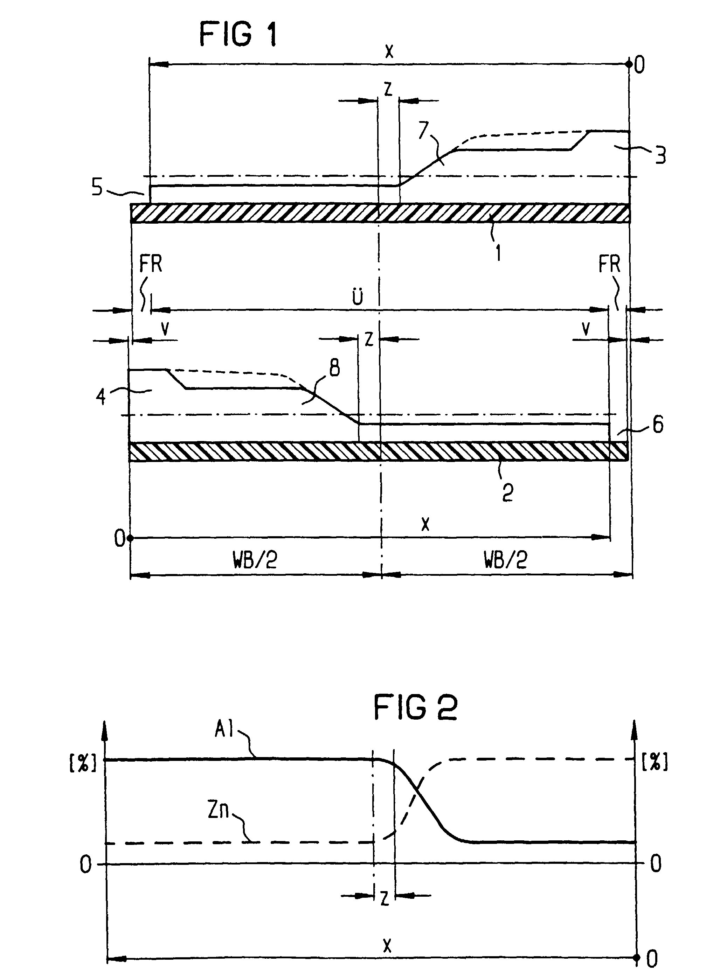

In der Fig. 1 ist ein Querschnitt durch zwei aneinanderliegende Kunststoffolien 1, 2 dargestellt, die mit Metallschichten 3, 4 versehen sind. Die Dicke der Metallschichten 3, 4 ist im Vergleich zur Dicke der Folien 1, 2 verzerrt dargestellt; in Wirklichkeit sind die Metallschichten 3, 4 wesentlich dünner als die Kuntststoffolien 1, 2. Die Dicke der Metallschichten 3, 4 ist in dem Bereich, der an metallfreie Randstreifen 5, 6 anschließt am geringsten und steigt von diesem Bereich ausgehend stufenförmig zur gegenüberliegenden Folienseite an, wo die Metallschichten 3, 4 am stärksten sind und wo, sie mit in der Figur nicht dargestellten Schoopschichten kontaktiert sind.

Es ist allerdings auch möglich, die Metallschichten 3, 4 derart aufzubringen, daß ihre Dicke nach der ersten Stufe 7, 8 den gestrichelt dargestellten Verlauf aufweist.

Der Bereich, in dem die erste Stufe 7, 8 beginnt ist gegenüber der geometrischen Mitte (halbe Wickelbreite WB/2 der Folien 1, 2) um einen Betrag z verschoben.

Um der Möglichkeit von Kurzschlüssen zwischen den Metallschichten 3, 4 vorzubeugen, werden die Folien 1, 2 mit einem gewissen Versatz V gegeneinander aufgewickelt.

Der kapazitiv wirksame Bereich des Kondensators wird durch den Überdeckungsgrad Ü der Metallschichten 3, 4 bestimmt, der sich aus der Breite x der Metallschichten 3, 4 abzüglich des Freirandbereichs FR und des Versatzes V ergibt.

Der Flächenwiderstand ist im dünnen Bereich der Metallschichten 3, 4 am größten ($R_{\square max}$) und im dicksten Bereich am geringsten ($R_{\square min}$).

In Fig. 2 ist die quantitative Verteilung der Legierungsbestandteile Aluminium (Al) und Zink (Zn) dargestellt.

Der Freirandbeich befindet sich in der Figur rechts, so daß dort der Zinkanteil größer als der Aluminiumanteil ist. Die Zusammensetzung der Legierungsbestandteile ist dabei derart gewählt, daß der höhere Aluminiumanteil ungefähr in der Mitte der Folien erreicht ist.

Zusätzlich zu den Legierungsbestandteilen Al/Zn können die Metallschichten auch noch Silber enthalten, das entweder als gleichmäßig eingelagerte Schicht(en)/Sperrschicht (en) oder als Dotierungsanteil vorliegt, der entweder gleichmäßig oder auch ungleichmäßig in der Al/Zn-Legierung verteilt ist.

Zur Berechnung der Querprofilierung der Metallschichten als Funktion von x kann folgendes ausgesagt werden.

Die Belagverluste können mit folgendem Lösungsansatz berechnet werden:

Der Verschiebungsstrom $I_0$, der pro Längeneinheit von der Kontaktierung in den Belag fließt, nimmt proportional mit x von $I_0$=max bei x=0 bis $I_0$=0 bei x=(Ü+FR+V) ab. In einem Flächenelement d1·xdx mit dem Flächenwiderstand $R_\square$ wird die Verlustleistung P verbraucht. Es gilt:

$$(1) \qquad dP=I^2 dR,$$

$$(2) \qquad I_x=I\frac{x}{\ddot{u}},$$

$$(3) \qquad dR=\frac{\rho}{A}dx.$$

Aus (1) bis (3) ergibt sich:

$$(1\text{-}3) \qquad dP=(I_0\frac{x}{\ddot{u}})^2\frac{\rho}{A}dx,$$

$$(4) \qquad P=I_0^2\frac{\rho}{A\ddot{u}}\int_0^{\ddot{u}} x^2 dx \;=\; \frac{1}{3}\frac{\ddot{u}}{G_0 l}I_0^2.$$

Für die Metallschichten 3, 4 ergibt sich mit den Flächenwiderständen $R_{\square 3,4}$ die Verlustleistung zu:

$$(5) \qquad P_{hB}\approx 2/3 I_0^2 \cdot 1,00 \cdot R_{\square hB}$$

(mit $R_{\square hB}$=const $\Rightarrow$**h**omogener Belag)

$$(6) \qquad Pk_B\approx 2/3 I_0^2 \cdot 0,75 \cdot R_{\square kB}$$

(mit $R_{\square kB}=R_{\square 0}+R_{\square 0}\cdot x \approx$**k**eilf. Belag)

$$(7) \qquad P_{sB}\approx 2/3 I_0^2 \cdot 0,40 \cdot R_{\square sB}$$

(mit $R_{\square sB}$, dem stufenförmig profilierten Belag nach Figur 1 und einer Legierungszusammensetzung als Funktion von x gemäß Figur 2).

Gleichung (7) zeigt eine deutlich reduzierte Verlustleistungsproduktion im Vergleich zu den bekannten Metallisierungsprofilen. Dieser Vorteil wird neben einer optimal gestalteten Metallisierungsprofilierung gemäß Figur 1 auch durch die Veränderung der Hauptlegierungsbestandteile Aluminium und Zink (gegebenenfalls zum Beispiel mit Anteilen von Silber) in Abhängigkeit von x gemäß Fig. 2 bewirkt.

Die Legierungszusammensetzung als Funktion von x trägt zur Lösung der der Erfindung zugrundeliegenden Aufgabe bei, weil, insbesondere bei dünnen Schichten, der schichtdickenbezogene Flächenwiderstand von Zink und Aluminium um ungefähr den Faktor 2 unterschiedlich ist, das heißt $R_{\square Al}<R_{\square Zn}$ bei d=const. Bei der Legierungsmetallisierung Zn/Al existiert zusätzlich der Effekt, daß bei kleinen Al-Anteilen (ungefähr <5% Al) dieser Aluminiumanteil als Störstelle in der Zn-Gitterstruktur wirkt und $R_{\square Zn/Al}$ überproportional zur vorliegenden Schichtdicke angehoben wird.

Wird nun der Aluminium-Anteil im dickeren Bereich der Stufenmetallisierung unter Berücksichtigung der Forderung $\Delta C/C(t,T,E,...)=$const auf einen maximal zulässigen Wert (ungefähr >10% Al) angehoben, dann wird der Flächenwiderstand folgerichtig überproportional zur vorliegenden Zn-Schichtdicke reduziert, weil sich ab einem Schwellwert die Al-Einlagerung im Zn-Gitter deutlich auf eine Reduzierung des Flächenwiderstandes R auswirkt.

Die Zuordnung der Legierungszusammensetzung in x-Richtung kann gemäß der gewünschten Anwendung (AC-, DC-, SK-Kondensatoren) optimal auch unter Fertigungsgesichtspunkten der Metallschichten gestaltet werden. Aus dem in Fig. 2 dargestellten qualitativen Verlauf der Legierungsbestandteile ist zu erkennen, daß der Abstand z in Bezug auf die Mittelachse als Sicherheitsüberdeckung des dünnen, mit guten Regeneriereigenschaften ausgestatteten Belags Berücksichtigt wird.

Wie bereits erwähnt, können die Legierungsmetallisierungen auch Silberanteile aufweisen, die analog zur Zn/Al-Legierung eine Funktion von x darstellen können. Hauptsächlich im Bereich der dünnen Metallisierung (Bereich $R_{max}$) zeichnen sich Vorteile ab, wenn Silber verstärkt eingesetzt wird, da der schichtdickenbezogene Flächenwiderstand überproportional und effektiv reduziert wird. In der Übergangszone von dicken zu dünnen Metallisierungen, das heißt im Bereich des Überdeckungsgrades ü, ist Silber besonders vorteilhaft.

Die Optimierung der Querprofilierung berücksichtigt auch die Verlustleistungsproduktion als Funktion von x. Die Berechnung der Formel (7) mit unterschiedlichen Flächenwiderstandsverhältnissen $R_{max}/R_{min}$ zeigt, daß insbesondere bei hohen $R_{max}/R_{min}$- $R_{max}/R_{min}$-Verhältnissen Belastungsspitzen im Bereich WB/2 auftauchen. Aufgrund dieser Zusammenhänge ist die sorgfältige Berechnung beziehungsweise Optimierung aller Parameter erforderlich, um die aufgezeigten Vorteile auch im technischen Produkt, wie zum Beispiel Kondensatorwickel für AC-Anwendungen mit einer Wickelbreite von ungefähr 50mm bis 170mm effektiv nutzen zu können.

Die aufgezeigten Vorteile ergeben sich auch in einer weiteren Verbesserung von zum Beispiel Kondensatoren mit strukturierten Belägen und/oder Kondensatorfolien mit einem Wellenschnitt im Freirandbereich.

Weiterhin ist auch möglich, die geschilderte Struktur der Metallschichten in geeigneter Weise auch als beidseitige Metallisierung mit versetztem Freirand herzustellen, wobei die dicke Schicht in der Kontaktzone angeordnet ist.

Andererseits ist es auch möglich, eine sehr dünne Metallisierung (zum Beispiel 15-30 $\Omega_\square$) mit Freirand mit der im Ausführungsbeispiel nach Fig. 1 geschilderten Struktur auf der zweiten Seite der Folie zu kombinieren.

**Patentansprüche**

1. Regenerierfähiger elektrischer Kondensator, insbesondere Leistungskondensator, welcher aus aufgewickelten Lagen von mit Metallschichten der Beläge versehenen Kunststoffolien besteht, wobei metallfreie Randstreifen auf den Längsseiten der Folien angeordnet sind, bei dem die Metallschichten aus einer Legierung bestehen und senkrecht zur Längsrichtung der Folien eine variable Dicke aufweisen, bei dem die Dicke der Metallschichten in den an die metallfreien Randstreifen angrenzenden Bereichen am geringsten ist und zur gegenüberliegenden Folienseite zunimmt und bei dem die Folien derart miteinander gewickelt sind, daß bei zwei aneinanderliegenden Folien die metallfreien Randstreifen an verschiedenen Stirnseiten des Kondensators angeordnet sind, **dadurch gekennzeichnet**,

   daß die Metallschichten (3, 4) eine in Abhängigkeit quer zur Laufrichtung der Folien (1, 2) unterschiedliche Dicke und Legierungszusammensetzung besitzen, derart, daß Dicke und Legierungszusammensetzung von dem an die metallfreien Randstreifen (5, 6) anschließenden Bereich zur gegenüberliegenden Folienseite variieren,
   daß die Metallschichten (3, 4) stufenförmig profiliert sind und aus einer Zink/Aluminium-Legierung bestehen, und daß der Aluminiumanteil von <5 % auf >10 % ansteigt.

2. Elektrischer Kondensator nach Anspruch 1, **dadurch gekennzeichnet,** daß die Metallschichten (3, 4) zusätzlich Silber, Magnesium und/oder Kupfer enthalten.

3. Elektrischer Kondensator nach Anspruch 2, **dadurch gekennzeichnet**, daß der Silberanteil als zumindest eine gleichmäßig eingelagerte Schicht enthalten ist.

4. Elektrischer Kondensator nach Anspruch 2, **dadurch gekennzeichnet**, daß der Silberanteil als Dotierung eingesetzt ist.

**5.** Elektrischer Kondensator nach einem der Ansprüche 1 bis 4,
**dadurch gekennzeichnet**,
daß der Aluminiumanteil in den an die metallfreien Randstreifen (5, 6) angrenzenden Bereichen am geringsten ist.

**6.** Elektrischer Kondensator nach einem der Ansprüche 1 bis 5,
**dadurch gekennzeichnet**,
daß der jeweils halbe Anstieg des Anteils der Metalle der Legierungszusammensetzung an einem Ort außerhalb der Folienmitte (WB/2) erreicht ist und von dieser um einen Betrag (z) verschoben ist.

**7.** Elektrischer Kondensator nach einem der Ansprüche 1 bis 6,
**dadurch gekennzeichnet**,
daß die Metallschichten (3, 4) eine Strukturierung aufweisen.

**8.** Elektrischer Kondensator nach einem der Ansprüche 1 bis 7,
**dadurch gekennzeichnet**,
daß die Kunststoffolien (1, 2) im Bereich der Freiränder (5, 6) mit einem Wellenschnitt versehen sind.

**Claims**

**1.** Regenerable electrical capacitor, in particular a power capacitor, which comprises wound layers of plastic films provided with metal coatings for the foils, metal-free edge strips being arranged on the longitudinal sides of the films, in which capacitor the metal coatings are made of an alloy and have a variable thickness at right angles to the longitudinal direction of the films, in which capacitor the thickness of the metal coatings is at its lowest in the regions adjacent to the metal-free edge strips and increases towards the opposite side of the film, and in which capacitor the films are wound with one another in such a manner that, in the case of two films which are one on top of the other, the metal-free edge strips are arranged at different ends of the capacitor, characterized in that the metal coatings (3, 4) have a thickness and alloy composition which vary transversely with respect to the direction in which the films (1, 2) run, in such a manner that the thickness and alloy composition vary from that region which is adjacent to the metal-free edge strips (5, 6) towards the opposite side of the film,
in that the metal coatings (3, 4) are profiled in the form of a step and are made of a zinc/aluminium alloy, and in that the aluminium component rises from less than 5% to more than 10%.

**2.** Electrical capacitor according to Claim 1, characterized in that the metal coatings (3, 4) contain silver, magnesium and/or copper in addition.

**3.** Electrical capacitor according to Claim 2, characterized in that the silver component is included as at least one uniformly embedded coating.

**4.** Electrical capacitor according to Claim 2, characterized in that the silver component is inserted as a dopant.

**5.** Electrical capacitor according to one of Claims 1 to 4, characterized in that the aluminium component is at its lowest in the regions adjacent to the metal-free edge strips (5, 6).

**6.** Electrical capacitor according to one of Claims 1 to 5, characterized in that half the increase in the proportion of the metals in the alloy composition is in each case achieved at a point outside the film centre (WB/2) and is shifted from there by an amount (z).

**7.** Electrical capacitor according to one of Claims 1 to 6, characterized in that the metal coatings (3, 4) are structured.

**8.** Electrical capacitor according to one of Claims 1 to 7, characterized in that the plastic films (1, 2) are provided with a corrugated section in the region of the free edges (5, 6).

**Revendications**

**1.** Condensateur électrique régénérable, notamment condensateur de puissance, formé par des couches enroulées de feuilles en matière plastique pourvues de couches métalliques des armatures, des bandes de bordure dépourvues de métal étant situées sur les côtés longitudinaux des feuilles, dans lequel les couches métalliques sont formées d'un alliage et présentent une épaisseur variable perpendiculairement à la direction longitudinale des feuilles, dans lequel l'épaisseur des couches métalliques est la plus réduite dans les zones contiguës aux bandes de bordure dépourvues de métal et augmente en direction du côté opposé de la feuille, et dans lequel les feuilles sont enroulées les unes avec les autres de manière à ce que, pour deux feuilles en contact l'une avec l'autre, les bandes de bordure dépourvues de métal soient situées sur des côtés frontaux différents du condensateur, caractérisé en ce que les couches métalliques (3, 4) possèdent, en fonction de leur situation perpendiculairement au sens des feuilles (1, 2), une épaisseur et une composition d'alliage différentes, de manière à ce que l'épaisseur et la composition de l'alliage varient de la zone contiguë aux bandes de bordure (5, 6) dépourvues de métal en direction du côté opposé de la feuille, en ce que les couches métalliques (3, 4) sont profilées de manière à former un gradin et sont formées d'un alliage zinc-aluminium, et en ce que la proportion d'aluminium augmente de moins de 5% à plus de 10%.

2. Condensateur électrique selon la revendication 1, caractérisé en ce que les couches métalliques (3, 4) contiennent, en plus, de l'argent, du magnésium et/ou du cuivre.

3. Condensateur électrique selon la revendication 2, caractérisé en ce que la proportion d'argent est contenue sous la forme d'au moins une couche intercalée de façon uniforme.

4. Condensateur électrique selon la revendication 2, caractérisé en ce que la proportion d'argent est insérée en tant que dopage.

5. Condensateur électrique selon l'une des revendications 1 à 4, caractérisé en ce que la proportion d'aluminium est la plus réduite dans les zones contiguës aux bandes de bordure (5, 6) dépourvues de métal.

6. Condensateur électrique selon l'une des revendications 1 à 5, caractérisé en ce que la moitié de l'augmentation de la proportion des métaux de la composition d'alliage est atteinte, à chaque fois, en un endroit extérieur au milieu de la feuille (WB/2) et est décalée d'une distance (z) par rapport à ce milieu.

7. Condensateur électrique selon l'une des revendications 1 à 6, caractérisé en ce que les couches métalliques (3, 4) présentent une structuration.

8. Condensateur électrique selon l'une des revendications 1 à 7, caractérisé en ce que les feuilles en plastique (1, 2) sont pourvues d'une coupe ondulée dans la région des bords dégagés (5, 6).

# FIG 1

# FIG 2